# EUROPEAN PATENT APPLICATION

(11) **EP 2 110 739 A1**
(43) Date of publication of application: **21.10.2009**
(21) Application number: 07831748.4
(22) Date of filing: 13.11.2007
(51) Int. Cl.: G06F 3/12, B41J 29/00, B41J 29/38, H04N 1/00

(54) **PRINT CONTROL SYSTEM, PRINTER DEVICE, AUTHENTICATION DEVICE, PRINTER DEVICE PROGRAM, AND AUTHENTICATION DEVICE PROGRAM**

(30) Priority: 29.01.2007 JP 2007017318
(71) Applicant: Brother Kogyo Kabushiki Kaisha, Nagoya-shi, Aichi 467-8561 (JP)
(72) Inventor: ITO, Katsuaki, Nagoya-shi Aichi 467-8561 (JP)
(74) Representative: Kuhnen & Wacker
(86) International application number: PCT/JP2007/072018
(87) International publication number: WO 2008/093461

(57) **Abstract**

Only display data for displaying content in a display portion is provided to a viewing terminal (1). When a user issues a command to print the content that is being viewed on the viewing terminal (1), a request to print is transmitted through a MFP (2) (S1, S2, S101 to S103). Print data to be printed by the MFP (2) is created only in a case where an authentication server (3) has approved printing (S201 to S205). The print data is transmitted to the MFP (2) (S206), and printing is performed (S121, S122). After the printing is performed, the print data is deleted (S124).

## Description

### Technical Field

The present invention relates to a printing control system, a printing apparatus, an authentication apparatus, a printing apparatus program, and an authentication apparatus program, and more specifically to a printing control system, a printing apparatus, an authentication apparatus, a printing apparatus program, and an authentication apparatus program that perform printing of content that is stored in a terminal that a user uses.

### Background Art

In recent years, systems have been provided by which personal computers and mobile terminals that are owned by individuals download and use content (text data, music data, still image data, moving image data, programs, and the like) that is provided over the Internet. In these types of systems, services are also provided that sell the content by charging a fee when the content is downloaded. An output system has been provided in which, among the content that is provided by a service such as this, printable content such as text data and still image data are subject to a determination that is made by an authentication server (an authentication apparatus) as to whether or not to approve the printing of the content, and the printing is performed only when the approval is received (for example, refer to Patent Document 1). In the output system that is described in Patent Document 1, a user terminal that a user uses is connected to a printer, and the printer is connected to the authentication server. Accordingly, when a print command is received by the user terminal, the text data, the print command, and a user ID which are stored in the user terminal are transmitted to the printer, and the printer connects to the authentication server and transmits the user ID and the like. When the approval for printing is received from the authentication server, the printing of the text data that was received from the user terminal is performed. A server also exists that sets a maximum number of times that the content can be printed, stores in the content the number of times that the content has been printed, and if the print command exceeds the maximum number of times that the content can be printed, does not perform the printing.
Patent Document 1: Japanese Laid-Open Patent Publication No. 2005-135373

However, in the output system that is described in Patent Document 1, the text data is stored in the user terminal, and the printing is performed by the printer based on the text data. In other words, print data for printing is created by the printer, and the printer receives from the authentication server only information as to whether or not the printing has been approved. Thus, in a case where the information that makes it possible to create the print data resides in an apparatus on the user side (the user terminal), it sometimes happens that the user can tamper with the text data and create counterfeit print data using an ordinary printer driver, or create the print data directly from the text data. If this occurs, it may create a problem in that it makes it possible for an unauthorized user to print the text data. Moreover, even in a case where the number of times that the content can be printed is limited, a problem exists in that, if the number of times that the content has been printed is falsified, such that the value is less than the maximum number of times that the content can be printed, the content can be printed any number of times.

### Disclosure of the Invention

The present disclosure addresses the problems described above and provides a printing control system, a printing apparatus, an authentication apparatus, a printing apparatus program, and an authentication apparatus program in which display data from which the print data cannot be created is stored in a viewing terminal that the user uses, approval is done by an authentication apparatus when the printing will be performed, and the printing is performed based on the print data that is stored somewhere other than in the viewing terminal.

According to the present disclosure, a printing control system includes a viewing terminal, an authentication apparatus, and a printing apparatus, the viewing terminal being provided with a display screen that displays an image, the authentication apparatus being connected to the printing apparatus and performing authentication of a user and approval of printing, and the printing apparatus being connected to the authentication apparatus and the viewing terminal. The viewing terminal includes display data storage means for storing display data for displaying content on the display screen, user identification information acquisition means for acquiring user identification information that identifies the user, print command means for issuing a command to print the content for which the display data is stored in the display data storage means, viewing terminal connecting means for connecting to the printing apparatus, and print command transmission means for transmitting from the viewing terminal connecting means to the printing apparatus, in a case where the command to print has been issued by the print command means, the user identification information that has been acquired by the user identification information acquisition means and content identification information that identifies the content for which the command to print has been issued. The printing apparatus includes printing means for performing printing, first printing apparatus connecting means for connecting to the viewing terminal, second printing apparatus connecting means for connecting to the authentication apparatus, and approval request transmission means for transmitting the user identification information and the content identification information from the second printing apparatus connecting means to the authentication apparatus in a case where the user identification information and the content identification information have been received from the viewing terminal by the first printing apparatus connecting means. The authentication apparatus includes authentication apparatus connecting means for connecting to the printing apparatus, approval information storage means for storing approval information that is associated with approval conditions for approving printing of the content in relation to the user identification information, approval determination means for determining, based on the approval information that is stored in the approval information storage means, whether or not to approve printing of the content for the user who is identified by the user identification information that was transmitted by the approval request transmission means, in a case where the user identification information and the content identification information have been received from the printing apparatus by the authentication apparatus connecting means, and print data transmission means for transmitting, from the authentication apparatus connecting means to the printing apparatus, in a case where it has been determined by the approval determination means that printing is approved, the print data for the content that is identified by the content identification information that has been received from the printing apparatus. The printing apparatus further includes printing control means for causing the print data that has been received from the second printing apparatus connecting means to be printed by the printing means.

Further, according to the present disclosure, the printing apparatus is connected to the viewing terminal and the authentication apparatus, the viewing terminal being provided with the display screen that displays the image that shows an item of content, the authentication apparatus performing the authentication of the user and the approval of printing. The printing apparatus includes the printing means for performing printing, printing information acquisition means for acquiring printing conditions information that is information that makes it possible to identify conditions for the performing of printing by the printing means, the first printing apparatus connecting means for connecting to the viewing terminal, the second printing apparatus connecting means for connecting to the authentication apparatus, the approval request transmission means for transmitting, from the second printing apparatus connecting means to the authentication apparatus, in a case where the print command information for implementing the command to perform printing has been received from the viewing terminal, the user identification information that identifies the user that is included in the print command information, as well as the content identification information that identifies the content for which the print command has been issued, and the printing control means for causing the print data that has been received from the authentication apparatus connecting means to be printed by the printing means.

In addition, according to the present disclosure, a printing apparatus program causes a computer to function as each type of processing means of the printing apparatus.

Furthermore, according to the present disclosure, the authentication apparatus performs the authentication of the user and the approval of printing and is connected to the printing apparatus that is connected to the viewing terminal that is provided with the display screen that displays the image that shows an item of content. The authentication apparatus includes the authentication apparatus connecting means for connecting to the printing apparatus, the approval information storage means for storing, separately for individual items of the content, the approval information that is associated with the approval conditions for approving printing of the content in relation to the user identification information, the approval determination means for determining, based on the approval information that is stored in the approval information storage means, in a case where the user identification information that identifies the user and the content identification information that identifies the content for which the print command has been issued have been received from the printing apparatus by the authentication apparatus connecting means, whether or not to approve printing of the content for the user who is identified by the user identification information that was transmitted by the approval request transmission means, and determination result transmission means for transmitting, from the authentication apparatus connecting means to the printing apparatus, in a case where it has been determined by the approval determination means that printing will be approved, the print data for the content that is identified by the content identification information that has been received from the printing apparatus.

In addition, according to the present disclosure, an authentication apparatus program causes a computer to function as each type of processing means of the authentication apparatus.

### Brief Description of the Drawings

FIG. 1 is a system configuration diagram that shows relationships among various apparatuses that configure a printing control system of the present disclosure.
FIG. 2 is a schematic figure that shows an electrical configuration of a viewing terminal 1.
FIG. 3 is a schematic figure that shows a configuration of a RAM 12.
FIG. 4 is a schematic figure that shows a configuration of a display data storage area 191.
FIG. 5 is a schematic figure that shows an electrical configuration of a MFP 2.
FIG. 6 is a schematic figure that shows a configuration of a RAM 22 of the MFP 2.
FIG. 7 is a schematic figure that shows an electrical configuration of an authentication server 3.
FIG. 8 is a schematic figure that shows a configuration of a hard disk device 33.
FIG. 9 is a schematic figure that shows a configuration of an approval information storage area 332.
FIG. 10 is a schematic figure that shows a configuration of a RAM 32.
FIG. 11 is a flowchart that shows processing among different terminals.
FIG. 12 is a figure that shows a content list screen 100.
FIG. 13 is a schematic figure that shows a configuration of a modified example of the printing control system of the present disclosure.
FIG. 14 is a schematic figure that shows a configuration of a modified example of the printing control system of the present disclosure.

### Best Mode for Carrying Out the Invention

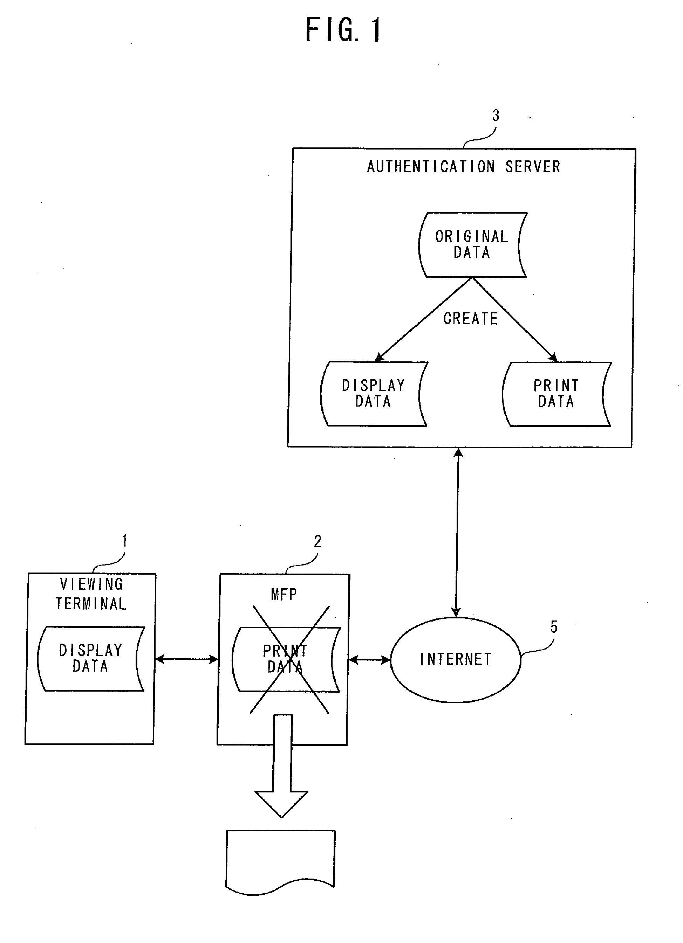

Hereinafter, an embodiment of the present disclosure will be explained with reference to the drawings. First, on overview of a printing control system of the present disclosure will be explained with reference to FIG. 1. As shown in FIG. 1, a viewing terminal 1 is connected to a MFP (Multi Function Printer) 2. The MFP 2 can be connected to the Internet 5, and an authentication server 3 can also be connected to the Internet 5. In addition, the MFP 2 and the authentication server 3 are connected through the Internet 5.

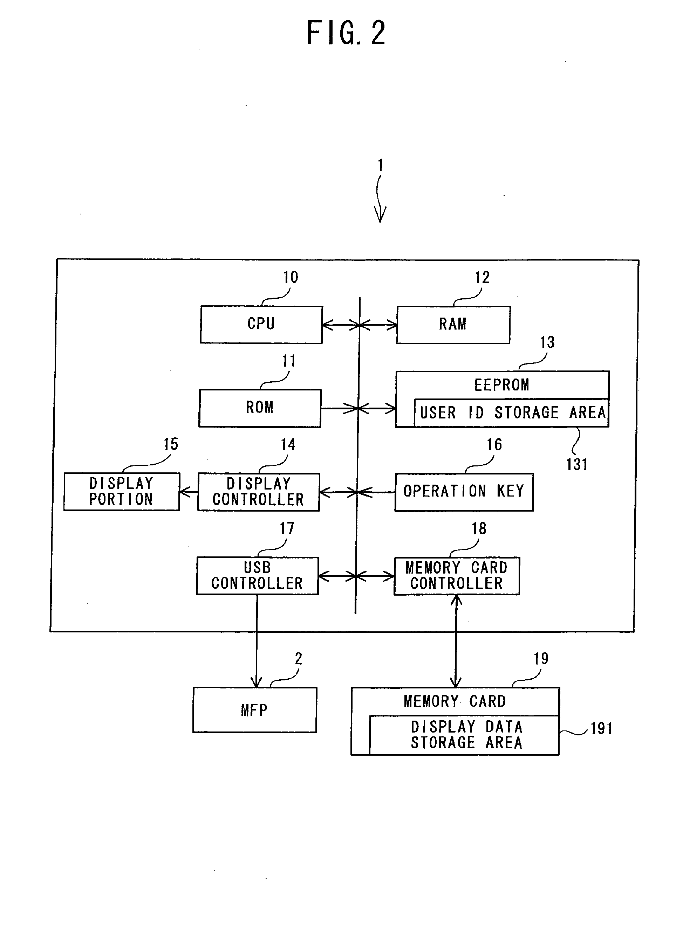

The viewing terminal 1 is a mobile type of terminal that is provided with a display portion 1 (refer to FIG. 2), and content that is made up of characters and images is displayed on the display portion 15. The MFP 2 is provided with a function as a printing apparatus that performs printing and a function as a communication apparatus. The authentication server 3 performs management of the content. In the printing control system of the present disclosure, only data (display data) for displaying the content in the display portion 15 of the viewing terminal 1 is provided. In a case where a user wants to print the content that is viewed on the viewing terminal 1, it is necessary to receive approval for the printing from the authentication server 3, and only in a case where the printing is approved, data (print data) is created in the authentication server 3 for printing by the printing apparatus of the MFP 2. The print data that is created by the authentication server 3 is transmitted to the MFP 2, and the printing is performed. Note that after the printing is performed, the print data is deleted.

Thus, in the printing control system of the present disclosure, only the display data resides in the viewing terminal 1, so it is impossible for the user to perform the printing of the content without authorization, and the authentication server 3 can manage the approval for printing the content.

Next, the viewing terminal 1 will be explained with reference to FIGS. 2 to 4. The viewing terminal 1 displays in the display portion 15 content that is stored in a memory card 19. The viewing terminal 1 can also issue a command to print the content that is stored in the memory card 19.

As shown in FIG. 2, a CPU 10 that performs control of the viewing terminal 1 is provided in the viewing terminal 1. A ROM 11, a RAM 12, an EEPROM 13, a display controller 14, an operation key 16, a USB controller 17, and a memory card controller 18 are connected to the CPU 10 through a bus. The ROM 11 stores a viewing program and the like for operating the viewing terminal 1. The RAM 12 temporarily stores various types of data. The EEPROM 13 stores a user ID and the like that is a code for identifying the user who is using the viewing terminal 1. The display controller 14 performs control of display portion 15. The operation key 16 accepts an input from the user. The USB controller 17 is a controller for connecting with another apparatus. The memory card controller 18 is a controller for connecting the memory card 19.

In the EEPROM 13, a user ID storage area 131 is provided that stores the user ID. The user ID is input by the user and stored when the user starts using the viewing terminal 1. In the memory card 19, a display data storage area 191 is provided that stores the display data for the content.

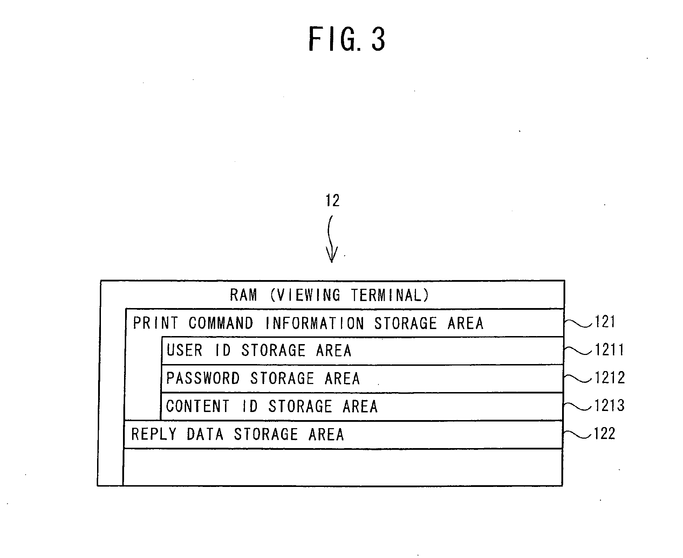

As shown in FIG. 3, a print command information storage area 121 and a reply data storage area 122 are provided in the RAM 12. Information that is used in print command information is stored in the print command information storage area 121. The print command information is information that is transmitted from the viewing terminal 1 to the MFP 2 when the user issues the print command. A user ID storage area 1211, a password storage area 1212, and a content ID storage area 1213 are provided in the print command information storage area 121. The user ID that is stored in the user ID storage area 131 of the EEPROM 13 is stored in the user ID storage area 1211. A password that is input by the user when the print command is issued is stored in the password storage area 1212. A content ID that is a code that identifies the content for which the print command has been issued is stored in the content ID storage area 1213. Note that various types of storage areas that are not shown in the drawings are also provided in the RAM 12.

Reply data that is transmitted from the MFP 2 is stored in the reply data storage area 122. The reply data is, for example, data that indicates that the printing in response to the print command has been completed, or data that indicates that the printing was not approved by the authentication server 3.

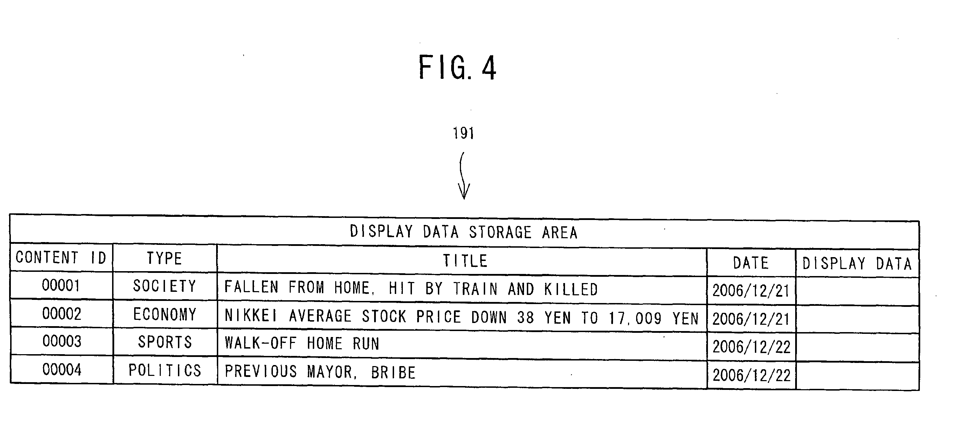

Next, the display data storage area 191 of the memory card 19 will be explained with reference to FIG. 4. As shown in FIG. 4, the display data for a plurality of content items are stored in the display data storage area 191, together with the content ID, a type, a title, and a date for each of the content items. Among the examples that are shown in FIG. 4, the display data is stored for a content item for which the content ID is "00001", the type is "Society", the title is "Fallen from Home, Hit by Train and Killed", and the date is "2006/12/21". The display data is also stored for a content item for which the content ID is "00002", the type is "Economy", the title is "Nikkei Average Stock Price Down 38 Yen to 17,009 Yen", and the date is "2006/12/21". The display data is also stored for a content item for which the content ID is "00003", the type is "Sports", the title is "Walk-off Home Run", and the date is "2006/12/22". The display data is also stored for a content item for which the content ID is "00004", the type is "Politics", the title is "Previous Mayor, Bribe", and the date is "2006/12/22".

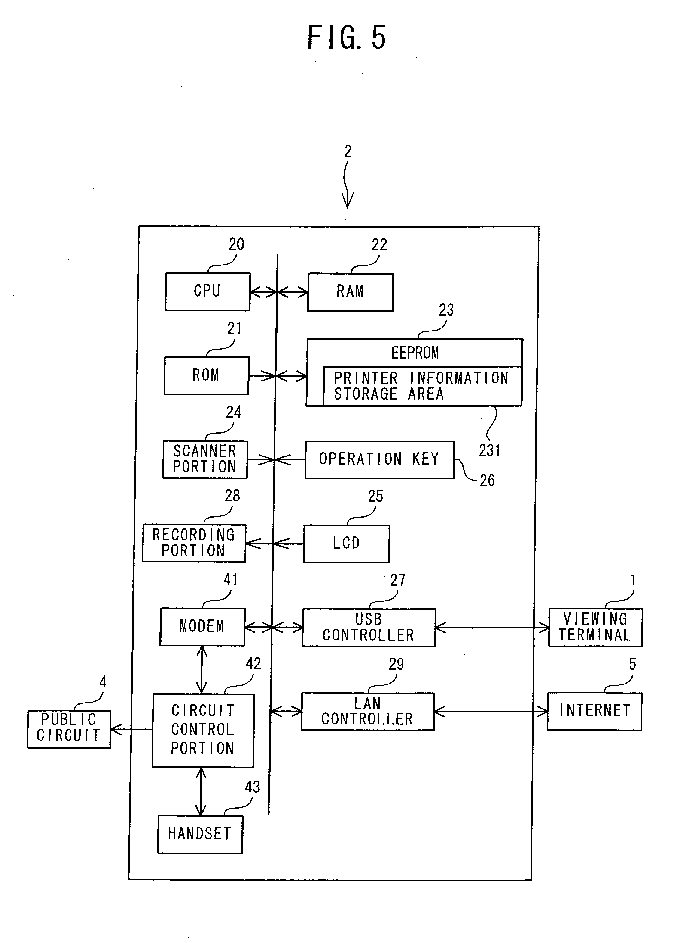

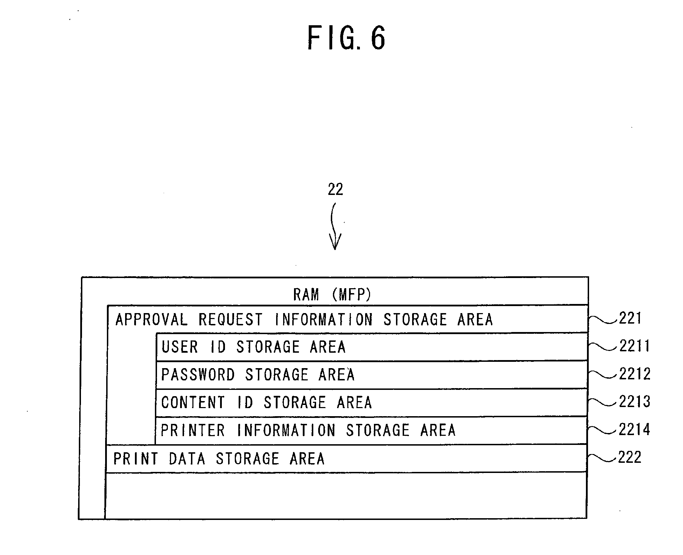

Next, the MFP 2 will be explained with reference to FIGS. 5 and 6. The MFP 2 is an apparatus that is provided with functions of a printing apparatus, a communication apparatus, a telephone, a facsimile machine, a scanner, and a copier. In the present disclosure, the function as the printing apparatus that performs printing and the function as the communication apparatus are the minimum required functions. A CPU 20 that performs control of the MFP 2 is provided in the MFP 2. A ROM 21, a RAM 22, an EEPROM 23, a liquid crystal display (LCD) 25 that is a display screen, an operation key 26 accepts an input from the user, and a USB controller 27 that connects with another apparatus are connected to the CPU 20 through a bus. The RAM 21 stores a printing program and a communication program for operating the MFP 2. The RAM 22 temporarily various types of data. The EEPROM 23 stores printer information that is information for the performing of the printing by the MFP 2, as well as other information.
The viewing terminal 1 is connected to the USB controller 27. A printer information storage area 231 that stores the printer information is provided in the EEPROM 23.

In order for the MFP 2 to function as the communication apparatus, it is also provided with a LAN controller 29 for connecting to the Internet 5, and the LAN controller 29 is connected to the CPU 20. Further, in order for the MFP 2 to function as the printing apparatus, it is provided with a recording portion 28 that performs the printing and is connected to the CPU 20. In the present embodiment, the MFP 2 is an apparatus that performs ink jet printing. Accordingly, a head drive portion for driving a piezoelectric actuator that is provided in each channel of an ink jet head, a roller drive portion for driving a feed roller for feeding printing paper, and the like are provided in the recording portion 28.

A scanner portion 24 and a modem 41 are also provided in the MFP 2 and are connected to the CPU 20. Note that a circuit control portion 42 for connecting to a public circuit 4 is connected to the modem 41, and a handset 43 that inputs and outputs voice is connected to the circuit control portion 42.

Next, various storage areas that are provided in the RAM 22 will be explained with reference to FIG. 6. An approval request information storage area 221 and a print data storage area 222 and the like are provided in the RAM 22 of the MFP 2. Approval request information that is transmitted to the authentication server 3 is stored in the approval request information storage area 221. A user ID storage area 2211, a password storage area 2212, a content ID storage area 2213, and a printer information storage area 2214 are provided in the approval request information storage area 221. The printer information is information that is required during the creation of the print data that will be used when the printing is performed by the recording portion 28, and in the present embodiment, the printer information includes four types of information, on the printing method, the paper size, the number of colors, and the color profile. For example, in the MFP 2, the printing method is ink jet, the size of the paper on which the content will be printed is A4, the number of ink colors is 5, and the type of color profile is sRGB. Note that the color profile is data for correcting for the differences in the output colors of device that output colors (a printing apparatus, a display, and the like). The print data that is transmitted from the authentication server 3 is stored in the print data storage area 222. Note that various types of storage areas that are not shown in the drawings are also provided in the RAM 22.

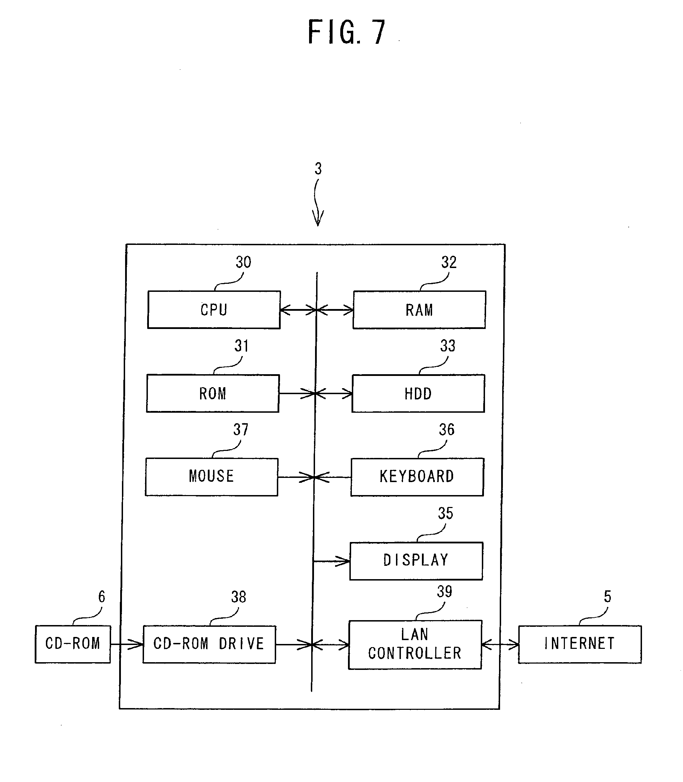

Next, the authentication server 3 will be explained with reference to FIGS. 7 to 10.

As shown in FIG. 7, a CPU 30 that performs control of the authentication server 3 is provided in the authentication server 3. A ROM 31, a RAM 32, a hard disk drive (HDD) 33, a keyboard 36, a mouse 37, a display 35, a CD-ROM drive 38, and a LAN controller 39 are connected to the CPU 30 through a bus. The ROM 31 stores an authentication program and the like for operating the authentication server 3. The RAM 32 temporarily stores various types of data. The HDD 33 stores various types of information. The keyboard 36 and the mouse 37 accept inputs from the user. The display 35 outputs an image. The CD-ROM drive 38 is a drive for reading a CD-ROM 6. The LAN controller 39 is a controller for connecting to the Internet 5.

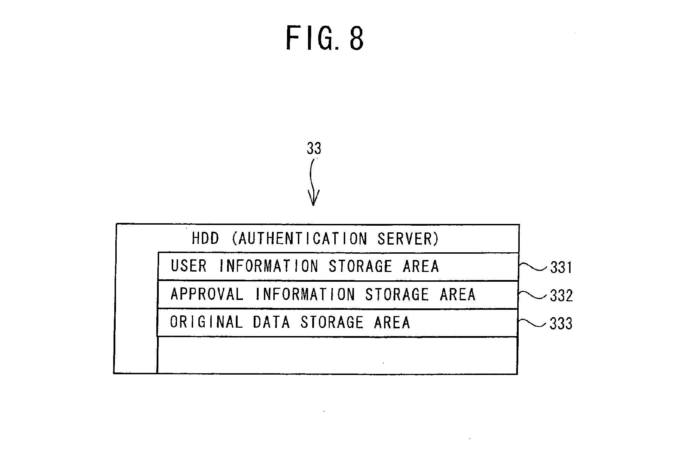

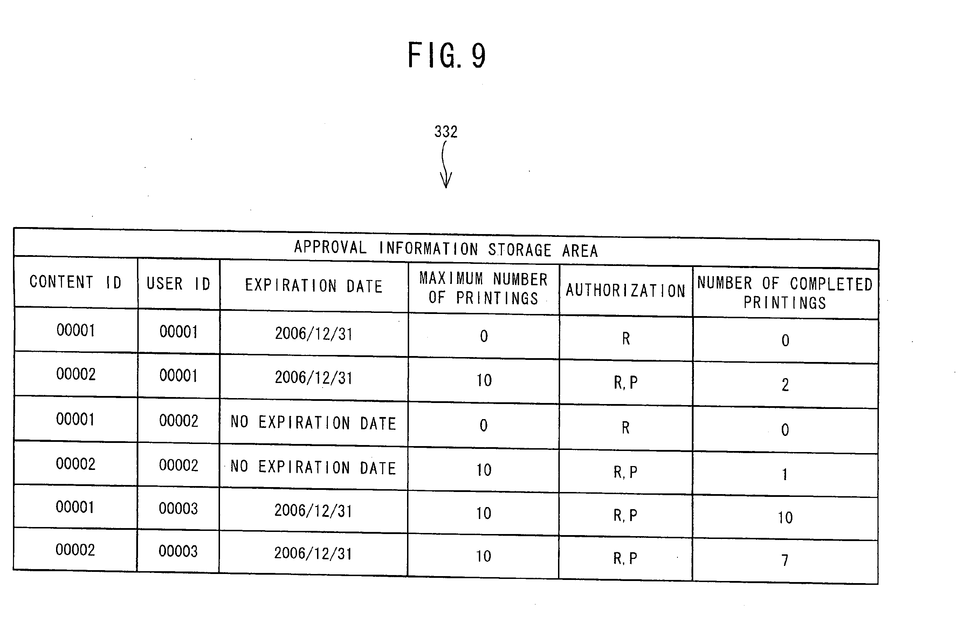

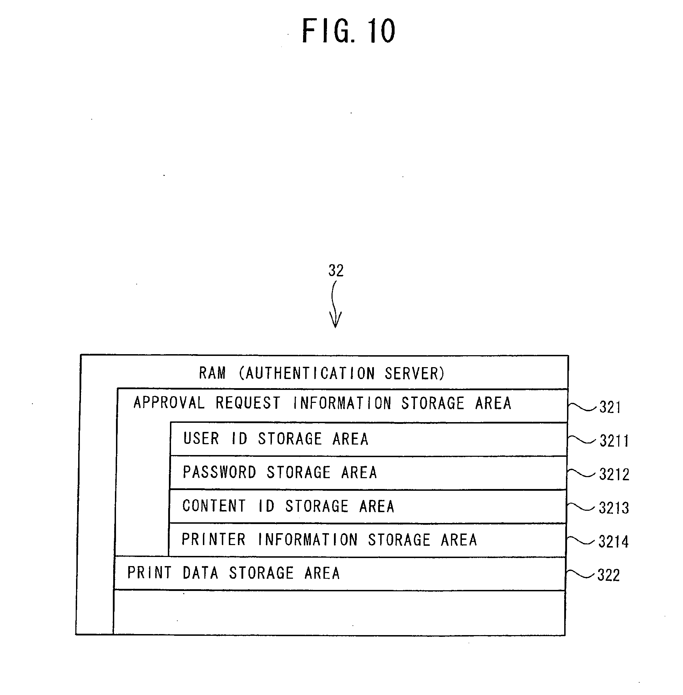

As shown in FIG. 8, a user information storage area 331 (refer to FIG. 9), an approval information storage area 332 (refer to FIG. 10), an original data storage area 333, and the like are provided in the HDD 33. Note that various types of storage areas that are not shown in the drawings are also provided in the HDD 33. A combination of the user ID and the password for the user for whom the printing of the content can be approved by the authentication server 3 is stored in the user information storage area 331. A condition (an approval condition) for approving the printing of the content for the combination of a content ID and the user ID is stored in the approval information storage area 332. Original data that is the original data for the content is stored in the original data storage area 333. The display data and the print data are created based on the original data.

Next, the approval information storage area 332 will be described with reference to FIG. 9. As shown in FIG. 9, a content ID field, a user ID field, an expiration date field, a maximum number of printings field, an authorization field, and a number of completed printings field are provided in the approval information storage area 332. The content ID is stored in the content ID field and the user ID is stored in the user ID field. The expiration date, the maximum number of printings, the authorization, and the number of completed printings, which are conditions for printing, are stored in relation to a combination of the user ID and the content ID. The expiration date is the last date on which it is possible to view the content (download the display data) and perform the printing of the content. The maximum number of printings is the number of times that the printing can be performed. The authorization indicates whether viewing and printing can be performed. "R" indicates the authorization for viewing, and "P" indicates the authorization for printing. The number of completed printings is the number of times that the printing has been actually performed.

In the example in FIG. 9, for the combination of the content ID "00001" and the user ID "00001", the authorization is for viewing only, and the expiration date is set to "2006/12/31". The maximum number of printings is zero because there is no authorization for printing, and the number of completed printings is zero. For the combination of the content ID "00002" and the user ID "00001", the authorization is for viewing and printing, and the expiration date is set to "2006/12/31". The maximum number of printings is set to 10, and printing has already been performed two times. For the combination of the content ID "00001" and the user ID "00002", the authorization is for viewing only, and no expiration date has been set. The maximum number of printings is zero because there is no authorization for printing, and the number of completed printings is zero. For the combination of the content ID "00002" and the user ID "00002", the authorization is for viewing and printing, and no expiration date has been set. The maximum number of printings is set to 10, and printing has already been performed one time. For the combination of the content ID "00001" and the user ID "00003", the authorization is for viewing and printing, and the expiration date is set to "2006/12/31". The maximum number of printings is set to 10, and printing has already been performed ten times. For the combination of the content ID "00002" and the user ID "00003", the authorization is for viewing and printing, and the expiration date is set to "2006/12/31". The maximum number of printings is set to 10, and printing has already been performed seven times.

Next, the storage areas that are provided in the RAM 32 of the authentication server 3 will be explained with reference to FIG. 10. As shown in FIG. 10, a approval request information storage area 321 and a print data storage area 322 are provided in the RAM 32. Information that is contained in the approval request information that is transmitted from the MFP 2 is stored in the approval request information storage area 321. In the same manner as in the approval request information storage area 221 of the MFP 2, a user ID storage area 3211, a password storage area 3212, a content ID storage area 3213, and a printer information storage area 3214 are provided for the approval request information. The print data that is created by the authentication server 3 and transmitted to the MFP 2 is stored in the print data storage area.

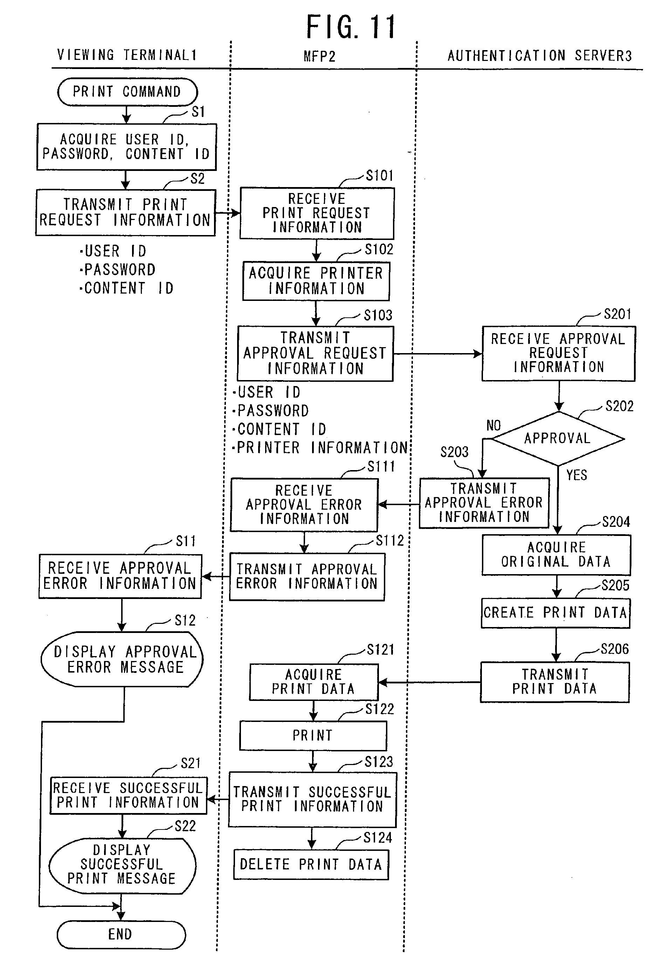

Next, processing that is performed in each of the viewing terminal 1, the MFP 2, and the authentication server 3 when the print command is issued by the viewing terminal 1 will be explained with reference to the flowchart in FIG. 11.

In the viewing terminal 1, when the viewing program that is stored in the ROM 11 is executed by the CPU 10, the processing from S1 to S22 which will be described later is performed. The viewing program monitors commands from the user and the receiving of data from the connected MFP 2 and performs various types of processing in response to the commands. If the print command is issued by the user, the viewing program performs the processing at S1 and S2, and if approval error information is received from the MFP 2, the viewing program performs the processing at S11 and S12. If successful print information is received from the MFP 2, the viewing program performs the processing at S21 and S22.

In the MFP 2, when a MFP program that is stored in the ROM 21 is executed by the CPU 20, the processing from S101 to S124 is performed. The MFP program monitors commands from the user, commands from the connected viewing terminal 1, and commands from the authentication server 3 that is connected through the Internet 5 and performs various types of processing in response to the commands. If print request information is received from the viewing terminal 1, the MFP program performs the processing from S101 to S103. If the approval error information is received from the authentication server 3, the MFP program performs the processing at S111 and S112. If the print data is received from the authentication server 3, the MFP program performs the processing from S121 to S124.

In the authentication server 3, when an authentication apparatus program that is stored in the ROM 31 is executed by the CPU 30, the processing from S201 to S206 is performed. The authentication server 3 monitors commands from a manager of the authentication server 3 and the receiving of data from the connected MFP 2 through the Internet 5 and performs various types of processing in response to the commands. If the approval request information is received, the processing from S201 to S206 is performed.

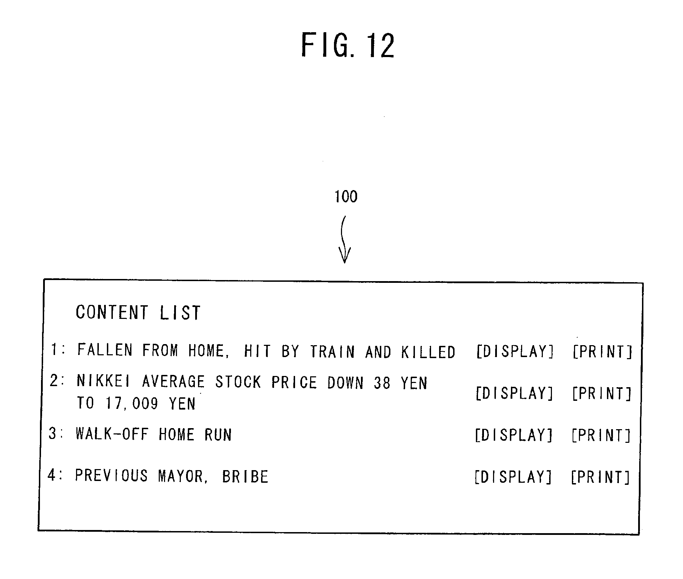

The processing sequence that prints the content, shown in FIG. 11, is started by the issuance of the print command in the viewing terminal 1. The issuance of the print command in the viewing terminal 1 is accomplished by the following operation, for example. The operation key 16 is operated, and a content list screen 100 (refer to FIG. 12) is displayed in the display portion 15. As shown in FIG. 12, a Display button and a Print button are displayed for each of the content names on the content list screen 100. Accordingly, if the user operates the operation key 16 to select the Print button that corresponds to the content the user wants to print, the print command is issued. The processing that is shown in FIG. 11 is then started.

In the viewing terminal 1, the user ID, the password, and the content ID are acquired (S1). Specifically, the user ID is read from the user ID storage area 131 of the EEPROM 13 and is stored in the user ID storage area 1211 of the print command information storage area 121 of the RAM 12. The password is input by the user on a password input screen (not shown in the drawings). The password input screen is displayed in the display portion 15 after the Print button is selected on the content list screen 100. A password input space, and OK button, and a Cancel button are provided on the password input screen. If the user operates the operation key 16 to input the password in the password input space and to select the OK button, the password is stored in the password storage area 1212. In addition, the content ID of the content that corresponds to the Print button that was selected on the content list screen 100 is stored in the content ID storage area 1213. Note that in a case where the Cancel button is selected, the print command is canceled, the list processing is not performed, and the system enters a state of waiting for a command from the user.

Next, the print request information is transmitted to the MFP 2 (S2). In the print request information, a command that indicates the print request is carried in a header portion, and the user ID, the password, and the content ID that are stored in the print command information storage area 121 are carried in a data portion.

The viewing terminal 1 then waits for a reply from the MFP 2. Note that in a case where there is no reply from the MFP 2 even after a specified period of time (for example, ten minutes) has elapsed, error processing is performed, and the processing ends.

On the other hand, when the print request information is received by the MFP 2, receiving processing for the print request information is performed (S101). At this point, the user ID, the password, and the content ID that are included in the print request information are respectively stored in the user ID storage area 2211, the password storage area 2212, and the content ID storage area 2213 of the approval request information storage area 221 of the RAM 22.

Next, the printer information is acquired (S102). At this point, the printer information that is stored in the printer information storage area 231 of the EEPROM 23 is stored in the printer information storage area 2214 of the approval request information storage area 221 of the RAM 22. As described previously, in the present embodiment, information that indicates that the printing method is ink jet, the size of the paper on which the content will be printed is A4, the number of ink colors is 5, and the type of color profile is sRGB is stored as the printer information.

Next, the approval request information is transmitted to the authentication server 3 (S103). In the approval request information, a command that indicates the approval request is carried in a header portion, and the user ID, the password, and the content ID that are stored in the approval request information storage area 221 are carried in a data portion. Note that in a case where the MFP 2 is not connected to the authentication server 3, error processing is performed, and the processing ends. For example, an error message such as "Not connected to authentication server" and the like may be displayed on the LCD 25, and an error lamp may be made to light. Error information that indicates a connection error may also be transmitted to the viewing terminal 1, and when the error information is received by the viewing terminal 1, an error message may be displayed in the display portion 15.

Next, the MFP 2 waits for a reply from the authentication server 3. Note that in a case where there is no reply from the authentication server 3 even after a specified period of time (for example, one minute) has elapsed, error processing is performed, and the processing ends. For example, an error message such as "No reply from authentication server" and the like may be displayed on the LCD 25, and an error lamp may be made to light. Error information that indicates a connection error may also be transmitted to the viewing terminal 1, and when the error information is received by the viewing terminal 1, an error message may be displayed in the display portion 15.

On the other hand, when the approval request information is received by the authentication server 3, receiving processing for the approval request information is performed (S201). At this point, the user ID, the password, and the content ID that are included in the approval request information are respectively stored in the user ID storage area 3211, the password storage area 3212, and the content ID storage area 3213 of the approval request information storage area 321 of the RAM 32.

Next, based on the user ID, the password, and the content ID that are included in the approval request information, a determination is made as to whether or not the printing of the content can be approved for this user (S202). At this point, four determinations are made, and in a case where all of the conditions are satisfied, it is determined that the printing can be approved.

First, a determination is made as to whether or not the user ID and the password match a registered user ID and password. A determination is made as to whether or not a combination of the user ID that is stored in the user ID storage area 3211 and the password that is stored in the password storage area 3212 of the approval request information storage area 321 is stored in the user information storage area 331 of the hard disk drive 33. If the combination is not stored in the user information storage area 331, a determination is made not to approve the printing (NO at S202).

If the combination of the user ID and the password is stored in the user information storage area 331, a determination is made for the next condition. For that purpose, the approval information for the combination of the user ID and the password is read from the approval information storage area 332. First, a determination is made as to whether or not printing is authorized. If "P" is not stored in the authorization field, printing is not authorized, so a determination is made not to approve the printing (NO at S202). If "P" is stored in the authorization field, it is determined that printing is authorized. Accordingly, a determination is made for the next condition.

The next condition is that the printing is being done within the approved expiration date. Accordingly, a determination is made as to whether the information that is stored in the expiration date field is one of a date that is not prior to the current date and information that indicates no expiration date. If the date is prior to the current date, then the expiration date has passed, so a determination is made not to approve the printing (NO at S202). In a case where the date is not prior to the current date, or there is no expiration date, a determination is made for the next condition.

The next condition is whether the number of times that the printing has already been performed has reached the maximum number of times that the printing can be performed. In a case where the number of times that the printing has been performed that is stored in the number of completed printings field of the approval information storage area 332 has reached the approved number of printings that is stored in the maximum number of printings field, a determination is made not to approve the printing (NO at S202). In a case where the number of completed printings has not reached the maximum number of printings, a determination is made to approve the printing (YES at S202). Note that at this point, 1 is added to the number of completed printings in the approval information storage area 332.

As described above, if the combination of the user ID and the password is registered, if printing is authorized, if the printing expiration date has not passed, and if the number of times that printing has been performed in the past has not reached the maximum number of printings, the determination is made to approve the printing. In a case where any one of these four conditions is not satisfied, the printing is not approved.

In a case where the printing is approved (YES at S202), the original data for the content that has the content ID is read from the original data storage area 333 of the hard disk device 33 (S204). The print data is then created and stored in the print data storage area 222 of the RAM 22 (S205). The print data is created based on the printer information that is stored in the printer information storage area 3214 of the approval request information storage area 321 in the RAM 32. In other words, the print data is created in a format that can be printed by the MFP 2. In the present embodiment, the print data is created for the MFP 2 to print the original data by the ink jet printing method, with the number of ink colors being 5, the type of color profile being sRGB, and the paper size being A4. Then the print data is transmitted to the MFP 2 (S206). The processing in the authentication server 3 then ends.

When the print data is received by the MFP 2, receiving processing for the print data is performed (S121). At this point, the received print data is stored in the print data storage area 222 of the RAM 22. Next, the printing is performed by the recording portion 28 based on the print data that is stored in the print data storage area 222 (S122). When the printing is completed, the information that indicates that the printing was successful (the successful print information) is transmitted to the viewing terminal 1 (S123). Thereafter, the print data that is stored in the print data storage area 222 is deleted (S124). The processing in the MFP 2 then ends.

On the other hand, when the print data is received by the MFP 2 (S21), a message that indicates that the printing was successful, such as "Printing completed," for example, is displayed in the display portion 15 (S22). The processing in the viewing terminal 1 then ends.

In a case where the printing was not approved by the authentication server 3 (NO at S202), the information that indicates the approval error (the approval error information) is transmitted to the MFP 2 (S203). The processing in the authentication server 3 then ends.

When the approval error information is received by the MFP 2 (S111), the approval error information is transmitted to the viewing terminal 1 (S112). The processing in the MFP 2 then ends.

When the approval error information is received by the MFP 2 (S11), a message that indicates the approval error, such as "Printing of the content was not approved," for example, is displayed in the display portion 15 (S12). The processing in the viewing terminal 1 then ends.

As described above, in the printing control system, in the viewing terminal 1, the MFP 2, and the authentication server 3 from which the printing control system is configured of the present disclosure, when a command to print the content is issued by the viewing terminal 1, the approval of the printing is performed by the authentication server 3, and the printing is performed only in a case where it is approved. Accordingly, because the approval information is not falsified by the user, approval control of the printing can be reliably performed. Further, the original data from which the print data can be created is not provided to the viewing terminal 1, and only the display data for displaying the content in the display portion 15 is provided. Moreover, the print data that is provided at the time of the printing is deleted immediately after the printing is performed. Accordingly, because the print data is not created from the data that is provided to the user (in the viewing terminal 1 and the MFP 2), it is possible to restrict the printing of the content. Therefore, the amount of the printing of the content can be controlled for each viewing terminal 1. This is useful for copyright protection.

Note that the printing control system, the viewing terminal 1, the MFP 2, and the authentication server 3 from which the printing control system is configured, the printing program, and the authentication apparatus program of the present disclosure are not limited to the embodiment described above, and it is obvious that various types of modifications can be made within the scope of the present disclosure.

In the embodiment that is described above, the user is made to input the password when the print command is issued, but the timing of the input of the password may also be different. For example, the password may be input when the viewing terminal 1 is started. The input of the password may also not be required. Further, the user ID that is stored in the user ID storage area 131 of the EEPROM 13 of the viewing terminal 1 is acquired automatically, but the user may also be made to input the user ID. In addition, in the embodiment that is described above, the approval control for the printing of the content is performed for each user on the basis of the user ID, but the control may also be performed for each viewing terminal 1 instead of for each user. In that case, what is stored in the EEPROM 13 is not the user ID, but a viewing terminal ID. The viewing terminal ID may also be carried in the print command information and the approval request information. In the user information storage area 331 in the authentication server 3, the viewing terminal ID may also be stored in association with a password. The password may also be controlled in relation to a combination of the user ID and the viewing terminal ID.

Additionally, in the embodiment that is described above, the print data is created in the authentication server 3 when the print command is issued, but it is also acceptable to create the print data at a different point in time. For example, the print data may be created in advance, based on the various items of the printer information, and may be stored in the one of the authentication server 3 and an apparatus that is connected to the authentication server 3. The print data may also be created by another apparatus that is connected to the authentication server 3, when the print command is issued.

Furthermore, in the embodiment that is described above, the MFP 2 that is provided with the combination of the printing apparatus function and the communication apparatus function is used as the printing apparatus, but it is not absolutely necessary for the printing apparatus and the communication apparatus to be combined into a single apparatus. The printing apparatus may also be configured from a plurality of apparatuses.

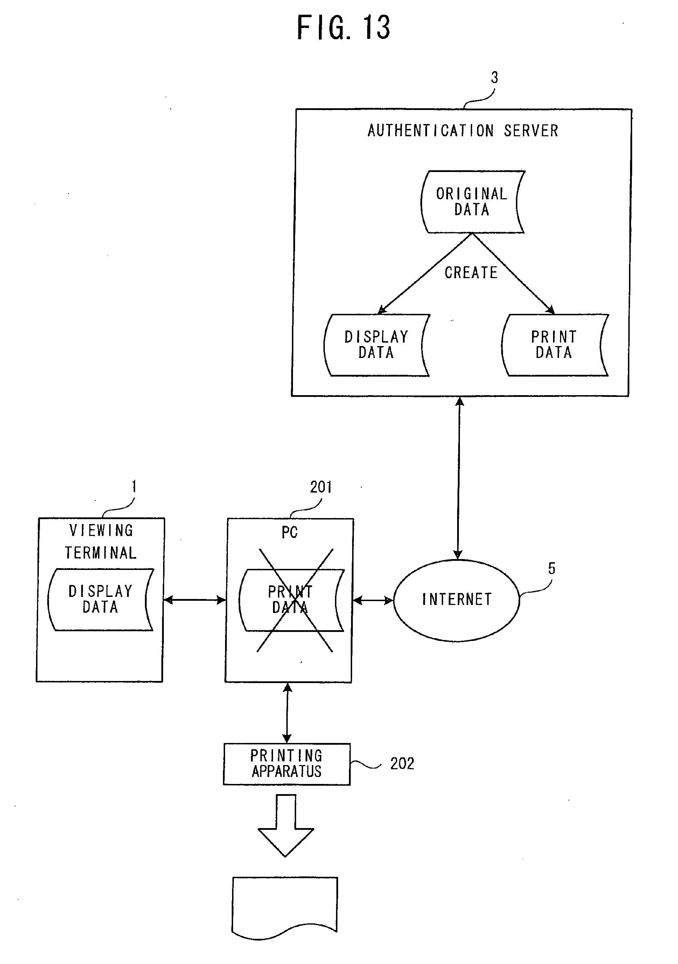

For example, as shown in FIG. 13, a configuration may be used in which a personal computer (PC) 201 functions as the communication apparatus and a printing apparatus 202 that functions as the printing apparatus is connected to the PC 201. In the example that is shown in FIG. 13, the viewing terminal 1 is connected to the PC 201. In this case, in the processing that is performed by the MFP 2 in the flowchart that is shown FIG. 10, the processing at S101 to S103, S111, S112, S121, S123, and S124 is performed by the PC 201. In the print processing at S122, a command to perform the printing is issued to the printing apparatus 202, and the printing apparatus 202 performs the printing based on the command, in the same manner as in the print processing for a printer that is connected to an ordinary personal computer. In this case, even though there is no MFP 2, it is acceptable to install only the printing program in an ordinary personal computer that is provided with a function that makes it capable of connecting with other devices, such as a USB controller and the like.

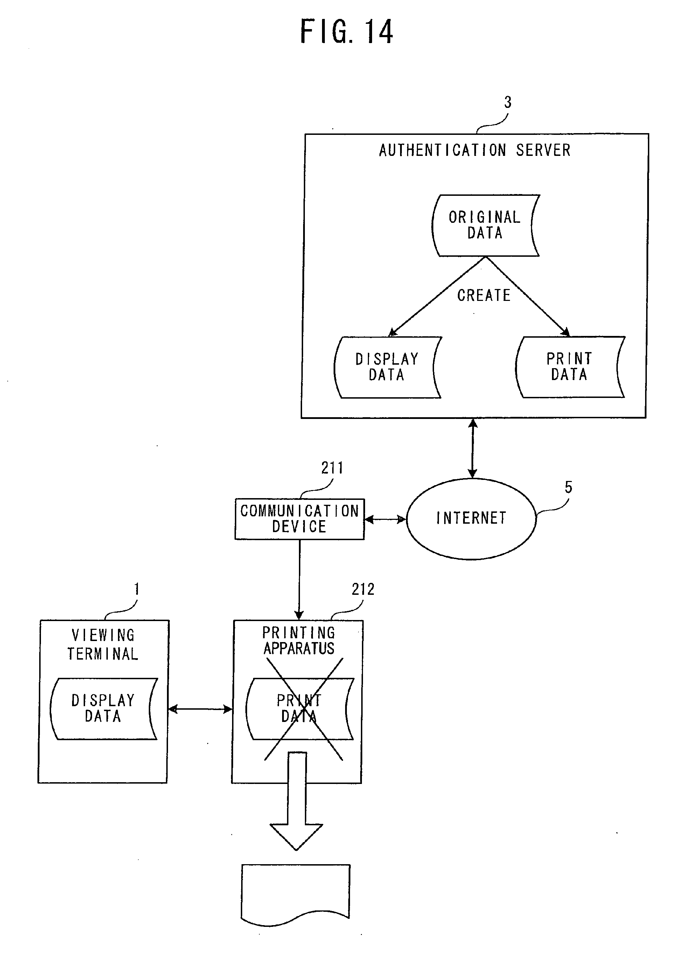

A configuration may also be used in which a communication apparatus 211 that functions as the communication apparatus and a printing apparatus 212 that functions as the printing apparatus are connected, as shown in FIG. 14. In the example that is shown in FIG. 14, the viewing terminal 1 is connected to the printing apparatus 212. In this case, in the processing that is performed by the MFP 2 in the flowchart that is shown FIG. 10, the processing at S101 and S102 is performed by the printing apparatus 212. Initiate the transmission processing for the approval request information at S103, the approval request information is transmitted from the printing apparatus 212 to the communication apparatus 211, and the communication apparatus 211 transmits the received approval request information to the authentication server 3. Conversely, in the approval error information receiving processing at S111, the communication apparatus 211 receives the approval error information from the authentication server 3 and transmits it to the printing apparatus 212. The printing apparatus 212 transmits the received approval error information to the viewing terminal 1 (S112). In the acquisition of the print data at S121, the communication apparatus 211 receives the print data from the authentication server 3 and transmits it to the printing apparatus 212. The printing apparatus 212 then performs the printing of the received print data (S122). After the printing is completed, the printing apparatus 212 performs the processing at S123 and S124. Note that in the communication apparatus 211, the print data is deleted after the print data is transmitted to the printing apparatus 212.

In the printing control system of the present disclosure, display data storage means in the viewing terminal can store the display data for displaying the content on the display screen, and user identification information acquisition means can acquire user identification information that identifies the user. Print command means can issue a command to print the content for which the display data is stored in the display data storage means. Viewing terminal connecting means can connect to the printing apparatus. In a case where the print command has been issued by the print command means, print command transmission means can transmit from the viewing terminal connecting means to the printing apparatus the user identification information that has been acquired by the user identification information acquisition means and content identification information that identifies the content for which the print command has been issued. In the printing apparatus, printing means can perform the printing, first printing apparatus connecting means can connect to the viewing terminal, and second printing apparatus connecting means can connect to the authentication apparatus. In a case where the user identification information and the content identification information have been received from the viewing terminal by the first printing apparatus connecting means, approval request transmission means can transmit the user identification information and the content identification information from the second printing apparatus connecting means to the authentication apparatus. In the authentication apparatus, authentication apparatus connecting means can connect to the printing apparatus, and approval information storage means can store the approval information that is associated with the approval conditions for approving the printing of the content in relation to the user identification information. In a case where the user identification information and the content identification information have been received from the printing apparatus by the authentication apparatus connecting means, approval determination means can perform the determination of whether or not to approve the printing of the content for the user who is identified by the user identification information that was transmitted by the approval request transmission means, the determination being based on the approval information that is stored in the approval information storage means. In a case where it has been determined by the approval determination means that the printing will be approved, print data transmission means can transmit from the authentication apparatus connecting means to the printing apparatus the print data for the content that is identified by the content identification information that has been received from the printing apparatus. In addition, printing control means in the printing apparatus can cause the print data that has been received from the second printing apparatus connecting means to be printed by the printing means. Therefore, because the authentication of the user and the approval determination for the printing are performed in the authentication apparatus, not in the printing apparatus, a copyright can be reliably protected. Moreover, because the approval determination for the printing is made by the authentication apparatus based on the approval information that is stored in the authentication apparatus, not in the user terminal or the printing apparatus, falsification of the approval information by the user does not occur. Accordingly, the approval of the printing of the content can be adequately controlled, such that falsification of the approval information by the user and unauthorized printing do not occur. Only the display data for displaying in display means is stored in the viewing terminal, so the user cannot create the print data for performing the printing without authorization. Furthermore, because the print data is transmitted to the printing apparatus when the printing is performed, the printing of content whose data has been falsified does not occur. This is useful for protecting a copyright on the provided content.

In the printing control system of the present disclosure, after the printing has been performed by the printing control means, print data deleting means in the printing apparatus can delete the received print data. Therefore, the print data is deleted after the printing, so misuse of the print data and repeated performing of unauthorized printing do not occur.

In the printing control system of the present disclosure, printing conditions information acquisition means of the printing apparatus can acquire printing conditions information that is information on conditions for the performing of the printing by the printing means. The approval request transmission means of the printing apparatus can transmit the printing conditions information together with the user identification information and the content identification information. In a case where it has been determined by the approval determination means that the printing will be approved, print data creation means of the authentication apparatus can create the print data for printing the content that is indicated by the content identification information, under the conditions that are indicated by the printing conditions information that has been received from the printing apparatus. The print data transmission means of the authentication apparatus can transmit the print data that has been created by the print data creation means. Therefore, the print data that is created is suited to the printing apparatus, so it is not necessary for the authentication apparatus to maintain print data that corresponds to various types of printing conditions. Accordingly, it is not necessary for the authentication apparatus to be provided with an extremely large storage area.

In the printing control system of the present disclosure, printing conditions information storage means of the printing apparatus can store the printing conditions information. The printing conditions information acquisition means can acquire the printing conditions information that is stored in the printing conditions information storage means by reading it. Therefore, it is not necessary for the user to input the printing conditions information for the printing apparatus, and it is not necessary for the printing apparatus to acquire the printing conditions information from another apparatus, so the approval request can be transmitted briefly.

In the printing control system of the present disclosure, the printing conditions information can include at least one of identification information for identifying the printing apparatus, the printing method of the printing means, the paper sizes that can be printed by the printing means, the number of colors that can be printed by the printing means, and the color profiles that are used by the printing means. It is therefore possible for print data that can be printed by the printing apparatus to be created in the authentication apparatus. This means that the printing of content whose data has been falsified does not occur.

In the printing control system of the present disclosure, the approval information storage means can store the approval information separately for each item of the content. This is convenient, because the approval of the printing can be separately controlled for each item of the content.

In the printing control system of the present disclosure, the approval information storage means can store the approval information separately for each of the printing conditions. This is convenient, because the approval of the printing can be separately controlled for each of the printing conditions.

In the printing apparatus of the present disclosure, the printing means can perform the printing, the printing conditions information acquisition means can acquire the printing conditions information that is the information that makes it possible to identify the conditions for the performing of the printing by the printing means, the first printing apparatus connecting means can connect to the viewing terminal, and the second printing apparatus connecting means can connect to the authentication apparatus. In a case where the print command information for implementing the command to perform the printing has been received from the viewing terminal, the approval request transmission means can transmit from the second printing apparatus connecting means to the authentication apparatus the user identification information that identifies the user that is included in the print command information, as well as the content identification information that identifies the content for which the print command has been issued. The printing control means can cause the print data that has been received from the authentication apparatus to be printed by the printing means. Therefore, because the authentication of the user and the approval determination for the printing are performed in the authentication apparatus, not in the printing apparatus, a copyright can be reliably protected. Falsification by the user of the information for approving the printing does not occur. Accordingly, falsification of the print data by the user and unauthorized printing by the printing apparatus does not occur. Furthermore, because the print data is transmitted from the authentication apparatus when the printing is performed, the printing of content whose data has been falsified does not occur. This is useful for protecting a copyright on the provided content.

In the printing apparatus of the present disclosure, after the printing has been performed by the printing control means, the print data deleting means can delete the received print data. Therefore, the print data is deleted after the printing, so misuse of the print data and repeated performing of unauthorized printing do not occur.

In the printing apparatus of the present disclosure, the printing conditions information acquisition means can acquire the printing conditions information that is the information on the conditions for the performing of the printing by the printing means. The approval request transmission means of the printing apparatus can transmit the printing conditions information together with the user identification information and the content identification information. Therefore, the print data can be created by the authentication apparatus such that it is suited to the printing apparatus.

In the printing apparatus of the present disclosure, the printing conditions information storage means can store the printing conditions information. The printing conditions information acquisition means can acquire the printing conditions information that is stored in the printing conditions information storage means by reading it. Therefore, it is not necessary for the user to input the printing conditions information for the printing apparatus, and it is not necessary for the printing apparatus to acquire the printing conditions information from another apparatus, so the approval request can be transmitted briefly.

In the printing apparatus of the present disclosure, the printing conditions information can include at least one of identification information for identifying the printing apparatus, the printing method of the printing means, the paper sizes that can be printed by the printing means, the number of colors that can be printed by the printing means, and the color profiles that are used by the printing means. It is therefore possible for print data that can be printed by the printing apparatus to be created in the authentication apparatus. This means that the printing of content whose data has been falsified does not occur.

In the authentication apparatus of the present disclosure, the authentication apparatus connecting means can connect to the printing apparatus, and the approval information storage means can store, separately for each item of the content, the approval information that is associated with the approval conditions for approving the printing of the content in relation to the user identification information. In a case where the user identification information that identifies the user and the content identification information that identifies the content for which the print command has been issued have been received from the printing apparatus by the authentication apparatus connecting means, the approval determination means can perform the determination of whether or not to approve the printing of the content for the user who is identified by the user identification information that was transmitted by the approval request transmission means, the determination being based on the approval information that is stored in the approval information storage means. In a case where it has been determined by the approval determination means that the printing will be approved, determination result transmission means can transmit from the authentication apparatus connecting means to the printing apparatus the print data for the content that is identified by the content identification information that was received from the printing apparatus. Therefore, because the approval determination for the printing is made by the authentication apparatus based on the approval information that is stored in the authentication apparatus, not in the user terminal or the printing apparatus, falsification of the approval information by the user does not occur. Accordingly, the approval of the printing of the content can be adequately controlled, such that falsification of the approval information by the user and unauthorized printing do not occur. Furthermore, because the print data is transmitted from the authentication apparatus when the printing is performed, the printing of content whose data has been falsified does not occur. This is useful for protecting a copyright on the provided content.

In the authentication apparatus of the present disclosure, in a case where it has been determined by the approval determination means that the printing will be approved, the print data can be created for printing the content that is indicated by the content identification information, under the conditions that are indicated by the printing conditions information that has been received from the printing apparatus, the printing conditions information being the information on the conditions for the performing of the printing by the printing means. The print data transmission means of the authentication apparatus can transmit the print data that has been created by the print data creation means. Therefore, the print data can be created such that it is suited to the printing apparatus, so it is not necessary for the authentication apparatus to maintain print data that corresponds to various types of printing conditions. Accordingly, it is not necessary for the authentication apparatus to be provided with an extremely large storage area.

In the authentication apparatus of the present disclosure, the printing conditions information can include at least one of identification information for identifying the printing apparatus, the printing method of the printing means, the paper sizes that can be printed by the printing means, the number of colors that can be printed by the printing means, and the color profiles that are used by the printing means. It is therefore possible for print data that can be printed by the printing apparatus to be created in the authentication apparatus. This means that the printing of content whose data has been falsified does not occur.

In the authentication apparatus of the present disclosure, the approval information storage means can store the approval information separately for each item of the content. This is convenient, because the approval of the printing can be separately controlled for each item of the content.

In the authentication apparatus of the present disclosure, the approval information storage means can store the approval information separately for each of the printing conditions. This is convenient, because the approval of the printing can be separately controlled for each of the printing conditions.

## Claims

1. A printing control system that comprises a viewing terminal, an authentication apparatus, and a printing apparatus, the viewing terminal being provided with a display screen that displays an image, the authentication apparatus being connected to the printing apparatus and performing authentication of a user and approval of printing, and the printing apparatus being connected to the authentication apparatus and the viewing terminal, **characterized in that**:
the viewing terminal includes
display data storage means for storing display data for displaying content on the display screen,
user identification information acquisition means for acquiring user identification information that identifies the user,
print command means for issuing a command to print the content for which the display data is stored in the display data storage means,
viewing terminal connecting means for connecting to the printing apparatus, and
print command transmission means for transmitting from the viewing terminal connecting means to the printing apparatus, in a case where the command to print has been issued by the print command means, the user identification information that has been acquired by the user identification information acquisition means and content identification information that identifies the content for which the command to print has been issued, the printing apparatus includes
printing means for performing printing,
first printing apparatus connecting means for connecting to the viewing terminal,
second printing apparatus connecting means for connecting to the authentication apparatus, and
approval request transmission means for transmitting the user identification information and the content identification information from the second printing apparatus connecting means to the authentication apparatus in a case where the user identification information and the content identification information have been received from the viewing terminal by the first printing apparatus connecting means,
the authentication apparatus includes
authentication apparatus connecting means for connecting to the printing apparatus,
approval information storage means for storing approval information that is associated with approval conditions for approving printing of the content in relation to the user identification information,
approval determination means for determining, based on the approval information that is stored in the approval information storage means, whether to approve printing of the content for the user who is identified by the user identification information that was transmitted by the approval request transmission means, in a case where the user identification information and the content identification information have been received from the printing apparatus by the authentication apparatus connecting means, and
print data transmission means for transmitting, from the authentication apparatus connecting means to the printing apparatus, in a case where it has been determined by the approval determination means that printing is approved, the print data for the content that is identified by the content identification information that has been received from the printing apparatus, and
the printing apparatus further includes printing control means for causing the print data that has been received from the second printing apparatus connecting means to be printed by the printing means.

2. The printing control system according to claim 1, **characterized in that**:
the printing apparatus further includes print data deleting means for deleting the received print data after printing has been performed by the printing control means.

3. The printing control system according to claim 1 or 2, **characterized in that**:
the printing apparatus further includes printing conditions information acquisition means for acquiring printing conditions information that is information on conditions for the performing of printing by the printing means,
the approval request transmission means of the printing apparatus transmits the printing conditions information together with the user identification information and the content identification information,
the authentication apparatus further includes print data creation means for creating the print data for printing the content that is indicated by the content identification information, under the conditions that are indicated by the printing conditions information that has been received from the printing apparatus, in a case where it has been determined by the approval determination means that printing will be approved, and
the print data transmission means of the authentication apparatus transmits the print data that has been created by the print data creation means.

4. The printing control system according to claim 3, **characterized in that**:
the printing apparatus further includes printing conditions information storage means for storing the printing conditions information, and
the printing conditions information acquisition means acquires the printing conditions information that is stored in the printing conditions information storage means by reading it.

5. The printing control system according to claim 3 or 4, **characterized in that**:
the printing conditions information includes at least one of identification information for identifying the printing apparatus, a printing method of the printing means, paper sizes that can be printed by the printing means, a number of colors that can be printed by the printing means, and color profile that is used by the printing means.

6. The printing control system according to any one of claims 1 to 5, **characterized in that**:
the approval information storage means stores the approval information separately for individual items of the content.

7. The printing control system according to any one of claims 1 to 6, **characterized in that**:
the approval information storage means stores the approval information separately for each of the printing conditions.

8. A printing apparatus that is connected to a viewing terminal and an authentication apparatus, the viewing terminal being provided with a display screen that displays an image that shows an item of content, the authentication apparatus performing authentication of a user and approval of printing, and the printing apparatus being **characterized by** comprising:
printing means for performing printing;
printing information acquisition means for acquiring printing conditions information that is information that makes it possible to identify conditions for the performing of printing by the printing means;
first printing apparatus connecting means for connecting to the viewing terminal;
second printing apparatus connecting means for connecting to the authentication apparatus;
approval request transmission means for transmitting, from the second printing apparatus connecting means to the authentication apparatus, in a case where print command information for implementing a command to perform printing has been received from the viewing terminal, user identification information that identifies the user that is included in the print command information, as well as content identification information that identifies content for which the print command has been issued; and
printing control means for causing print data that has been received from the authentication apparatus to be printed by the printing means.

9. The printing apparatus according to claim 8, **characterized by** further comprising:
print data deleting means for deleting the received print data after printing has been performed by the printing control means.

10. The printing apparatus according to claim 8 or 9, **characterized by** further comprising:
printing conditions information acquisition means for acquiring printing conditions information that is information on conditions for the performing of printing by the printing means,
wherein the approval request transmission means of the printing apparatus transmits the printing conditions information together with the user identification information and the content identification information.

11. The printing apparatus according to claim 10, **characterized by** further comprising:
printing conditions information storage means for storing the printing conditions information,
wherein the printing conditions information acquisition means acquires the printing conditions information that is stored in the printing conditions information storage means by reading it.

12. The printing apparatus according to claim 10 or 11, **characterized in that**:
the printing conditions information includes at least one of identification information for identifying the printing apparatus, a printing method of the printing means, paper sizes that can be printed by the printing means, a number of colors that can be printed by the printing means, and color profile that is used by the printing means.

13. A printing apparatus program that causes a computer to function as each type of processing means of the printing apparatus that is described in any one of claims 5 to 8.

14. An authentication apparatus that performs authentication of a user and approval of printing and is connected to a printing apparatus that is connected to a viewing terminal that is provided with a display screen that displays an image that shows an item of content, the authentication apparatus being **characterized by** comprising:
authentication apparatus connecting means for connecting to the printing apparatus;
approval information storage means for storing, separately for individual items of the content, approval information that is associated with approval conditions for approving printing of the content in relation to the user identification information;
approval determination means for determining, based on the approval information that is stored in the approval information storage means, in a case where the user identification information that identifies a user and content identification information that identifies the content for which a print command has been issued have been received from the printing apparatus by the authentication apparatus connecting means, whether to approve printing of the content for the user who is identified by the user identification information that was transmitted by the approval request transmission means; and
determination result transmission means for transmitting, from the authentication apparatus connecting means to the printing apparatus, in a case where it has been determined by the approval determination means that printing will be approved, print data for the content that is identified by the content identification information that has been received from the printing apparatus.

15. The authentication apparatus according to claim 14, **characterized by** further comprising:
print data creation means for creating the print data for printing the content that is indicated by the content identification information, under conditions that are indicated by printing conditions information that has been received from the printing apparatus and that is information on conditions for the performing of printing by the printing means, in a case where it has been determined by the approval determination means that printing will be approved,
wherein the print data transmission means of the authentication apparatus transmits the print data that has been created by the print data creation means.

16. The authentication apparatus according to claim 15, **characterized in that**:
the printing conditions information includes at least one of identification information for identifying the printing apparatus, a printing method of the printing means, paper sizes that can be printed by the printing means, a number of colors that can be printed by the printing means, and color profile that is used by the printing means.

17. The authentication apparatus according to any one of claims 14 to 16, **characterized in that**:
the approval information storage means stores the approval information separately for individual items of the content.

18. The authentication apparatus according to any one of claims 14 to 17, **characterized in that**:
the approval information storage means stores the approval information separately for each of the printing conditions.

19. An authentication apparatus program that causes a computer to function as each type of processing means of the authentication apparatus that is described in any one of claims 14 to 18.
